(19) Europäisches Patentamt
European Patent Office
Office européen des brevets

(11) EP 0 605 293 B1

(12) **FASCICULE DE BREVET EUROPEEN**

(45) Date de publication et mention de la délivrance du brevet:
**17.09.1997 Bulletin 1997/38**

(51) Int Cl.[6]: **G02B 1/04**, C08F 220/30

(21) Numéro de dépôt: **93403125.3**

(22) Date de dépôt: **21.12.1993**

(54) **Compositions polymères à faible indice de jaune, compositions polymérisables et lentilles les mettant en oeuvre**

Polymere Zusammensetzungen mit geringem Vergilbungsgrad, polymerisierbare Zusammensetzungen und daraus hergestellte Linsen

Polymeric compositions with a low yellowing index, polymerisable compositions and lenses made therefrom

(84) Etats contractants désignés:
**DE DK ES GB IE IT NL SE**

(30) Priorité: **22.12.1992 FR 9215533**

(43) Date de publication de la demande:
**06.07.1994 Bulletin 1994/27**

(73) Titulaire: **ESSILOR INTERNATIONAL Compagnie Générale d'Optique**
**F-94220 Charenton le Pont (FR)**

(72) Inventeurs:
- **Keita, Gabriel**
  **F-92400 Courbevoie (FR)**
- **Renaudineau, Joel**
  **F-94000 Créteil (FR)**

(74) Mandataire: **Casalonga, Axel**
**BUREAU D.A. CASALONGA - JOSSE**
**Morassistrasse 8**
**80469 München (DE)**

(56) Documents cités:
**EP-A- 0 059 561**
**WO-A-92/05209**
**US-A- 4 931 523**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 605 293 B1

Printed by Jouve, 75001 PARIS (FR)

## Description

La présente invention a pour objet de nouvelles compositions polymères destinées à être utilisées pour la fabrication de lentilles ophtalmiques et aux lentilles ophtalmiques et à leur utilisation dans le domaine de l'ophtalmique et du matériel utilisant des lentilles telles que des viseurs, des optiques de caméras.

Les verres ophtalmiques obtenus à partir de matériaux acryliques dérivés du bisphénol A sont en général trop jaunes pour pouvoir être utilisés.

L'utilisation d'additifs pouvant réduire le taux de jaune est connue depuis longtemps, mais cet effet est généralement atteint au détriment du taux de conversion et des propriétés thermomécaniques.

Les lentilles ophtalmiques peuvent être obtenues sous leur forme définitive par coulée de compositions polymérisables entre deux moules présentant des géométries de surface requises puis polymérisation. On obtient alors une lentille dont les deux faces se trouvent dans leur état final.

Dans le but de réduire les stocks de lentilles ophtalmiques, il est fréquent de fabriquer des lentilles semi-finies comportant, après moulage une seule face à sa géométrie finale, la deuxième face pouvant alors être surfacée à la demande.

L'opération de surfaçage de la seconde face provoque une augmentation de la température de la lentille semi-finie et il est indispensable que le polymère constituant cette lentille soit suffisamment rigide et non déformable à la température atteinte. Le polymère doit de ce fait posséder de bonnes propriétés thermomécaniques.

La demanderesse a découvert, ce qui fait l'objet de l'invention, qu'en utilisant pour réaliser le polymère destiné à la fabrication de lentilles ophtalmiques, conformes à l'invention, une composition copolymérisable comprenant au moins un monomère de formule

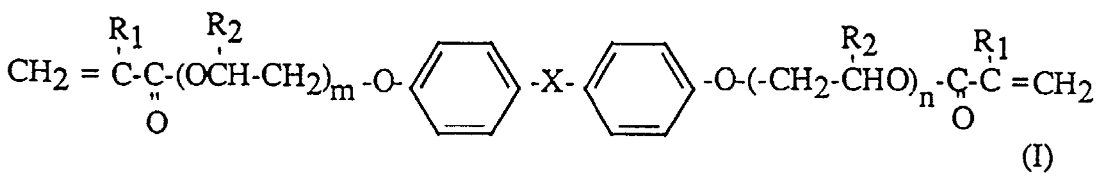

(I)

et un monomère dérivé de l'alcool allylique, il était possible de préparer des polymères présentant à la fois de bonnes propriétés thermomécaniques et un indice de jaune faible, les rendant particulièrement appropriés pour leur utilisation dans la fabrication de lentilles ophtalmiques.

Les monomères de formule I sont connus en eux mêmes et certains de leurs dérivés ont déjà été préconisés dans le domaine de l'ophtalmique (GB-A 1 514 810, FR-A 2 431 511). Dans ce dernier cas, les monomères de formule I sont utilisés avec des monomères copolymérisables par voie radicalaire, dont l'homopolymère a un indice égal ou supérieur à 1,55 en vue de réaliser des lentilles d'indice élevé.

Les polymères réalisés à partir du monomère de formule I ou les copolymères du FR-A 2431 511 présentent cependant l'inconvénient d'être trop jaunes pour être réellement utilisables tels quels dans le domaine de l'optique ophtalmique.

L'invention a pour objet les polymères constitués de motifs dérivant de monomères de formule I et de dérivés d'alcool allylique.

Un autre objet de l'invention est constitué par les compositions polymérisables comprenant les monomères de formule I et les dérivés d'alcool allylique.

L'invention a également pour objet les verres ophtalmiques obtenus grâce à l'utilisation de ces polymères et à leur utilisation dans le domaine de l'optique ophtalmique et dans des appareils mettant en oeuvre des optiques.

D'autres objets de l'invention apparaîtront à la lecture de la description et des exemples qui suivent.

La composition polymère qui fait l'objet de l'invention est essentiellement caractérisée par le fait qu'elle est obtenue par polymérisation d'une composition polymérisable comprenant :

(A) un composant A comprenant: en poids au moins 50 % et de préférence 70 à 100 % d'un monomère ou d'un mélange de monomères de formule I

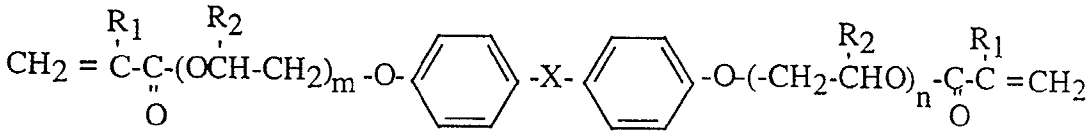

(I)

dans laquelle $R_1$ et $R_2$, désignent indépendamment l'un de l'autre, hydrogène ou un radical alkyle inférieur en $C_1$-$C_6$, X désigne O, S, CO, $SO_2$, $-CH_2-$,-CH=CH-ou

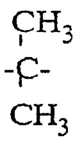

la somme m + n est comprise entre 0 et 10,

0 à 50 % en poids d'un ou plusieurs comonomère(s) vinylique(s), acrylique(s) ou méthacrylique(s) mono-ou polyfonctionnel(s) (II)

(B) un composant B présent dans des proportions de

0,5 à 15 % et de préférence 1 à 5 % en poids par rapport au poids des monomères (I) et (II) et comprenant des monomères de formule (III)

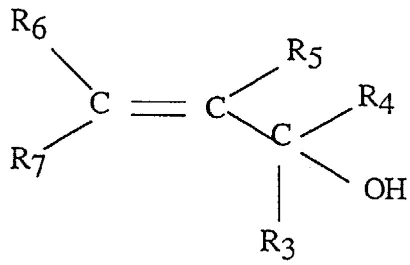

(III)

dans laquelle

$R_3$ et $R_4$ désignent hydrogène ou l'un des groupements $R_3$ et $R_4$ désigne hydrogène tandis que l'autre forme avec le groupement $R_7$ un cycle en $C_5$-$C_{10}$ éventuellement substitué par un ou plusieurs groupement(s) alkyle en $C_1$-$C_4$, linéaires ou ramifiés;

$R_5$, $R_6$ désignant indépendamment l'un de l'autre hydrogène ou un groupement alkyle en $C_1$-$C_6$, pouvant être substitué par un ou plusieurs groupement(s) OH, et dont la chaîne peut éventuellement être interrompue par un ou plusieurs groupement(s) éther, ester ou cétonique et $R_7$ lorsqu'il ne forme pas un cycle en $C_5$-$C_{10}$ avec un des radicaux $R^3$ ou $R^4$ étant un radical tel que défini pour $R^5$ et $R^6$.

Conformément à l'invention, le radical alkyle en $C_1$-$C_6$ désigne de préférence un groupement méthyle ou éthyle.

Les monomères de formule I plus particulièrement préférés sont ceux dans lesquels $R_1$ et $R_2$ désignent hydrogène et X désigne

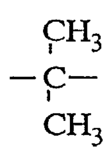

et m + n est un nombre entier de 2 à 7. Pour les monomères de formule III, les significations particulièrement préférées sont celles dans lesquelles $R_3$ et $R_4$ désignent hydrogène, $R_5$ désigne méthyle, $R_6$ désigne hydrogène ou méthyle, $R_7$ désigne hydrogène, méthyle, éthyle ou $CH_2OH$.

Les polymères préférés sont ceux pour lesquels le monomère de formule I est le 2,2 -bis (4-méthacroyloxydiéthoxyphényl)propane.

Les monomères de formule II peuvent être aromatiques ou non aromatiques.

Parmi les composés aromatiques monofonctionnels, on peut citer le phényl (méth)acrylate, le benzyl(méth)acrylate, le phénoxyéthyl(méth)acrylate, le styrène.

Parmi les composés non aromatiques, on peut utiliser de façon préférentielle un alkyl(méth)acrylate monofonctionnel tel que le méthyl(méth)acrylate, l'éthyl(méth)acrylate, le butyl(métha)crylate, l'isobutyl(méth)acrylate ou les dérivés difonctionnels tels que le butanedioldi(méth)acrylate ou trifonctionnel tel que le triméthylolpropane tri(méth)acrylate.

Les monomères de formule III plus particulièrement préférés conformément à l'invention sont l'alcool allylique, l'alcool méthallylique, l'alcool crotylique, le 2-cyclohexène 1-ol, le trans 2-hexène 1-ol, le cis 2-butène 1,4-diol, le 3-méthyl 2-butène 1-ol.

La polymérisation s'effectue de façon connue en soi par réalisation d'un mélange primaire contenant les différents monomères de la composition polymérisable, la réaction de polymérisation pouvant être catalysée par des catalyseurs tels que le peroxyde de benzoyle, le peroxydicarbonate de cyclohexyle, le peroxydicarbonate de di-isopropyle, le 2,2'-azobis isobutyronitrile. Les catalyseurs sont utilisés dans des quantités suffisantes pour amorcer ou maintenir la polymérisation et sont généralement comprises entre 0,001 et 1 % en poids par rapport au poids total de la composition à polymériser.

Les lentilles ophtalmiques sont préparées plus particulièrement en introduisant la composition souhaitée contenant les différents monomères précités dans un système constitué par un moule bi-plan en verre et l'on soumet l'ensemble à un cycle thermique de polymérisation évoluant sur une durée de 10 à 20 heures, d'environ 45°C à 90°C et de préférence d'environ 50 et 85°C. Il est également possible de procéder à une polymérisation par voie photochimique ou par chauffage par induction sous l'effet d'une onde électromagnétique de type micro-onde (2450 MHz ou 915 MHz) ou de type haute fréquence (3,56 MHz ; 27,12 MHz ou 40,68 MHz)

Une telle polymérisation par chauffage par induction est effectuée en une durée généralement inférieure à 1 heure.

Le polymère sous forme de lentille ainsi obtenu est ensuite soumis à un recuit à une température et pendant une durée suffisante pour éliminer les contraintes résiduelles dans la lentille. La température est généralement comprise entre 100 et 120°C et le recuit s'effectue pendant environ 1 à 5 heures.

Il est également possible de procéder à la polymérisation dans des moules dont l'un comporte une face à la géométrie finale de la lentille et une deuxième face qui elle n'est pas réglée en fonction de la géométrie de la surface de la lentille finale mais permet de préparer une seconde face qui peut être surfacée à la demande.

L'invention a également pour objet la composition polymérisable telle que définie ci-dessus, dans son application à la préparation de compositions polymères.

Les polymères ainsi obtenus notamment à la suite du moulage peuvent être utilisés pour la réalisation d'éléments ophtalmiques tels que des lentilles ophtalmiques, des verres de lunettes ou pour des lentilles utilisées dans des viseurs, des optiques d'appareils divers tels que appareil photo, caméra, microscope

La détermination de l'indice de jaune est effectuée par voie spectroscopique et visuelle. Pour la voie spectroscopique, on utilise une méthode standardisée (ASTM D-1925-63) d'indice de jaune qui est défini de la façon suivante :

$$Yi = \frac{(127.5\ X - 105..8\ Z)}{Y}$$

où X, Y, Z sont les coordonnées trichromatiques de l'échantillon, mesuré par spectrophotomètre UV visible sur l'ensemble du spectre entre 380 et 780 nanomètres. La valeur Yi est donnée après recuit.

Par voie visuelle on détermine 4 étalons de verre contenant des quantités croissantes de colorant jaune pour établir une gamme de jaunes et on classe les échantillons suivant leurs niveaux de jaune respectifs.

Le taux de conversion est déterminé par dosage de la double liaison de la fonction méthacrylique en proche infrarouge en suivant l'aire de la bande à 6160 $cm^{-1}$ qui est caractéristique de la première harmonique de la vibration de la liaison CH du méthylène terminal. Le taux de conversion est exprimé de la façon suivante :

$$p = \frac{\text{Aire } (t = 0)\text{-Aire } (t)}{\text{Aire } (t = 0)}$$

Les propriétés thermomécaniques sont déterminées à partir d'un appareil de TMA (flexion 3 points). La rigidité des lentilles est caractérisée par les modules à haute température, au plateau caoutchoutique.

Les exemples suivants sont destinés à illustrer l'invention sans pour autant présenter un caractère limitatif.

On prépare dans chaque cas un mélange primaire par homogénéisation, pendant une heure des quantités de tétraéthoxy bisphénol A diméthacrylate commercialisé par la société AKZO sous la dénomination Diacryl 121 et éventuellement de monomères méthacryliques (éthyl méthacrylate, butanediol diméthacrylate). Le mélange est catalysé avec du peroxydicarbonate de cyclohexyle à 0,5 % par rapport à l'ensemble de la formulation.

Les dérivés d'alcool allylique de formule III ont été introduits dans des proportions indiquées ci-dessous tout juste avant la coulée dans un système constitué de deux moules bi-plans en verre et d'un joint en EVA. L'ensemble subit alors un cycle thermique de 18 heures consistant à partir d'une température de 48°C pour arriver au bout de 16 heures à une température de 85°C.

Les produits polymérisés ainsi obtenus sont recuits pendant 3 heures à 110°C avant d'en déterminer les caractéristiques.

Exemple I

On prépare un mélange comme indiqué ci-dessus en homogénéisant sous agitation du tétraéthoxy bis-phénol A diméthacrylate commercialisé par la société AKZO sous la dénomination Diacryl 121 et du méthacrylate d'éthyle dans des proportions respectives de 92 parties de Diacryl 121, et huit parties de méthacrylate d'éthyle. Ce mélange est catalysé par utilisation de 0,5 % en poids de peroxydicarbonate de cyclohexyle (CHPC). On introduit dans cette composition un composé répondant à la formule III

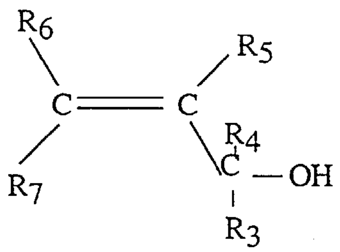

(III)

dans laquelle $R_3$, $R_4$, $R_5$ et $R_6$ ont les significations indiquées dans le tableau.

Tableau I

| Additifs | $R_3$ | $R_4$ | $R_5$ | $R_6$ | $R_7$ | % massique | Yi | visuel | E (MPa) |
|---|---|---|---|---|---|---|---|---|---|
| réf | | | | | | 0 | 2,95 | 3 | 47 |
| alcool allylique | H | H | H | H | H | 2 | 1,52 | 2 | 58 |
| alcool méthallylique | H | H | Me | H | H | 0,99 | 1,47 | 2 | 67 |
| alcool crotylique | H | H | H | H | Et | 1,08 | 1,64 | 2 | 57 |
| trans 2-hexene 1-ol | H | Me | H | H | Et | 2 | 1,81 | 2 | 60 |
| cis 2 butene 1,4-diol | H | H | H | H | CH2OH | 2 | 1,53 | 2 | |
| 3 methyl 2 butene 1-ol | H | H | H | Me | Me | 0,98 | 1,36 | 2 | |
| cyclo 2-hexene 1-ol | H | C | H | H | C-C | 2,06 | 1,64 | 2 | 59 |

Yi est l'indice de jaune, visuel est l'indice déterminé de façon visuelle; E désigne le module élastique au plateau caoutchoutique (150°C).

On constate dans chacun des cas une nette diminution de l'indice de jaune et une amélioration des propriétés mécaniques.

Exemple 2

On utilise la composition polymérisable de l'exemple 1 ainsi que le même catalyseur dans les proportions indiquées dans l'exemple I. Les résultats obtenus sont les suivants :

Tableau II

| additif | % | Yi | p | E(100°C) | E(150°C) |
|---|---|---|---|---|---|
| alcool allylique | 0 | 2,95 | 93 | 57 | 47 |

Tableau II (suite)

| additif | % | Yi | p | E(100°C) | E(150°C) |
|---|---|---|---|---|---|
| " | 0,55 | 2,16 | 93 | | |
| " | 1,01 | 1,95 | 96 | | |
| " | 1,51 | 1,89 | 97 | | |
| " | 2 | 1,54 | 95 | | 58 |
| " | 2,45 | 1,48 | | | |
| " | 3 | 1,48 | | | |
| 2 méthyl 2 propene 1-ol | 0,98 | 1,57 | >93 | 83 | 66 |
| " | 1,47 | 1,54 | >93 | 87 | 77 |
| " | 1,97 | 1,47 | >93 | 82 | 67 |
| " | 2,48 | 1,47 | >93 | 89 | 74 |
| " | 2,96 | 1,55 | >93 | 76 | 64 |
| " | 3,9 | 1,75 | >93 | 71 | 62 |

Exemple 3

On utilise une composition polymérisable comprenant 85 parties en poids du produit Diacryl D 121 et 15 parties en poids de 1,4-butane diol diméthacrylate qui est homogénéisé comme décrit ci-dessus. On utilise comme catalyseur 0,5 parties en poids de peroxydicarbonate de cyclohexyle. Les résultats obtenus sont les suivants:

Tableau III

| additif | % | Yi | p | E(150°C) |
|---|---|---|---|---|
| alcool allylique | 0 | 2,54 | 86 | 106 |
| | 1 | 2,26 | 89 | 133 |
| | 1,5 | 2,2 | 89 | 115 |

Exemple 4

On prépare une composition polymérisable en utilisant du tétraéthoxy bis-phénol A diméthacrylate vendu sous la dénomination Diacryl 121 par la société AKZO. Ce monomère est mélangé avec 0,5 % en poids de peroxydicarbonate de cyclohexyle. On y introduit à titre d'additif les composés figurant dans le tableau IV ci-après pour obtenir les résultats indiqués ci-dessous.

Tableau IV

| additif | % | Yi | p | E(100)C) | E(150°C) |
|---|---|---|---|---|---|
| 2-méthyl 2 propene 1-ol | 10 | 1,73 | >93 | | |
| | 8 | 2,06 | >93 | 84,67 | 71,6 |
| | 5 | 2,13 | >93 | 88,97 | 73,58 |
| alcool crotylique | 5 | 2,36 | >93 | 78,18 | 69,19 |
| 2-cyclohexène 1-ol | 5 | 1,87 | >93 | 49,34 | 53,42 |

Exemple 5

On prépare les compositions polymérisables à base de monomères décrites dans le tableau V suivant

Tableau V

| Exemple | Monomère I | Comonomères II | Composition | Amorceur |
|---|---|---|---|---|
| 5 A | D121 | isobornyl méthacrylate | 80/20 | CHPC (0.5 %) |
| 5 B | D121 | Benzyl méthacrylate | 80/20 | CHPC (0.5 %) |
| 5 C | D121 | Styrène | 80/20 | CHPC (0,5 %) |
| 5 D | D121 | | 100 | CHPC (0,5 %) |

On obtient les résultats décrits dans le tableau VI

Tableau

| Formulations | Yi après recuit | niveau de jaune |
|---|---|---|
| A | 2,32 | 4 |
| A + 2 % alcool méthallylique | 1,17 | 2 |
| B | 2,3 | 4 |
| B + 2 % alcool méthallylique | 1,21 | 2 |
| C | 1,75 | 3 |
| C + 2 % alcool méthallylique | 1,39 | 2 |
| D | 4 | 4 |
| D + 2 % alcool méthallylique | 1,9 | 2 |

La détermination visuelle du niveau de jaune a été effectuée de la façon suivante :

- étalon 0 : correspond à la couleur obtenue avec le produit Orma sans addition de colorant jaune (Orma est une marque de la société ESSILOR d'un matériau polymère obtenu à partir du bis(allyl carbonate) de diéthylèneglycol utilisé comme référence
- étalon 1 : Orma + 0,0025 % du colorant jaune néozapon 157
- étalon 2 : Orma + 0,01 % du colorant jaune Néozapon 157
- étalon 3 : Orma + 0,025 du colorant jaune Néozapon 157.

Les niveaux sont déterminés selon le tableau suivant.

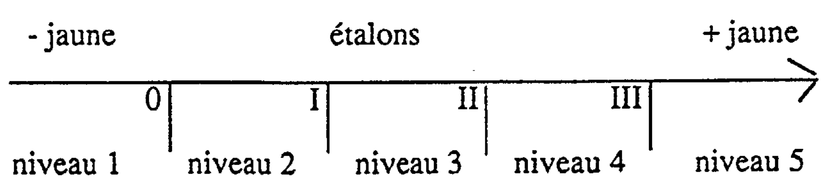


**Revendications**

1. Composition polymère caractérisée par le fait qu'elle résulte de la polymérisation d'une composition polymérisable comprenant au moins un monomère de formule (I)

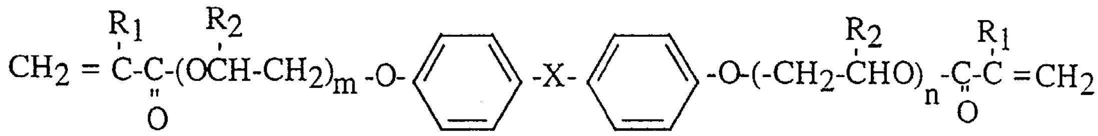

(I)

dans laquelle $R_1$ et $R_2$, identiques ou différents, désignent hydrogène ou alkyle en $C_1$-$C_6$; X désigne O, S, $SO_2$, -CO, $-CH_2-$, -CH=CH- ou

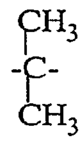

m + n est compris entre 0 et 10; et
un monomère dérivé de l'alcool allylique.

2. Procédé de préparation de la composition polymère selon la revendication 1, caractérisé par le fait que l'on procède à la polymérisation de la composition polymérisable, en présence d'un amorceur ou catalyseur de polymérisation.

3. Procédé selon la revendication 2, caractérisé par le fait que l'on procède à la polymérisation par voie photochimique ou par chauffage par induction.

4. Procédé de fabrication d'une lentille finie ou semi-finie, caractérisé par le fait que l'on procède à la coulée de la composition polymérisable selon la revendication 1 entre deux moules présentant les géométries de surface requises et ensuite à la polymérisation telle que définie à la revendication 2 ou 3, suivie d'un recuit.

5. Lentille ophtalmique constituée d'un polymère résultant de la polymérisation de la composition polymérisable telle que définie à la revendication 1 ou obtenue selon le procédé de la revendication 2 ou 3.

6. Utilisation de la composition polymère selon la revendication 1 pour la fabrication de lentilles ophtalmiques ou de lentilles destinées à des viseurs ou des optiques d'appareils.

7. Utilisation d'une lentille telle que définie dans la revendication 5, pour la fabrication de verres pour lunettes ou d'optiques diverses.

8. Verre de lunettes caractérisé par le fait qu'il est constitué d'une lentille telle que définie dans la revendication 5.

9. Objectif caractérisé par le fait qu'il comprend au moins une lentille telle que définie dans la revendication 5.

10. Composition polymère caractérisée par le fait qu'elle résulte de la polymérisation d'une composition polymérisable comprenant :

(A) un composant A comprenant : au moins 50 % en poids d'un monomère ou d'un mélange de monomères répondant à la formule (I)

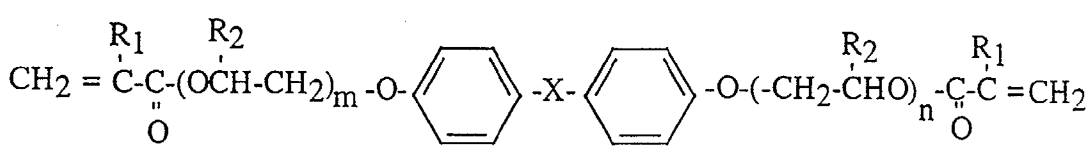

(I)

dans laquelle $R_1$ et $R_2$, identiques ou différents, désignent hydrogène ou alkyle en $C_1$-$C_6$; X désigne

O, S, $SO_2$, -CO, $-CH_2-$, -CH=CH- ou

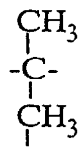

m + n est compris entre 0 et 10, et

- 0 à 50 % en poids d'un ou plusieurs comonomères vinylique(s),
- acrylique(s), ou méthacrylique(s) mono ou poly fonctionnel(s) (II) ; et

(B) un composant B présent dans des proportions de

- 0,5 à 15 % en poids, de préférence 1 à 5 % en poids par rapport au poids des composants I + II, comprenant un composé de formule (III)

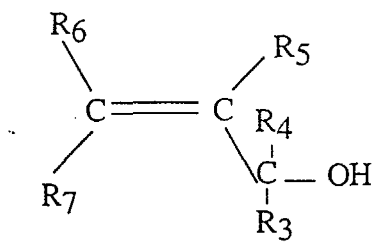 (III)

dans laquelle

$R_3$ et $R_4$ désignent hydrogène ou bien l'un des radicaux $R_3$ ou $R_4$ est un atome d'hydrogène tandis que l'autre forme un cycle avec $R_7$ ayant 5 à 10 atomes de carbone éventuellement substitué par un ou plusieurs groupement(s) alkyle en $C_1$-$C_4$, linéaire(s) ou ramifié(s);
$R_5$, $R_6$ sont choisis, indépendamment l'un de l'autre, parmi l'atome d'hydrogène, les groupements alkyle en $C_1$-$C_6$, pouvant être substitué(s) par un ou plusieurs groupement(s) OH et dont la chaîne peut éventuellement être interrompue par un ou plusieurs groupement(s) éther, ester ou cétonique, et $R_7$ lorsqu'il ne forme pas un cycle en $C_5$-$C_{10}$ avec un des radicaux $R_3$ ou $R_4$ étant un radical tel que défini pour $R_5$ et $R_6$.

**11.** Composition polymère selon la revendication 10 caractérisée par le fait que le composé de formule I est mis en oeuvre dans des proportions comprises entre 70 et 100 % en poids par rapport au poids du composant A.

**12.** Composition polymère selon l'une quelconque des revendications 10 ou 11, caractérisée par le fait que dans la formule I, $R_1$ et $R_2$ désignent H ou $CH_3$ et X désigne

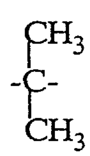

et m + n est un nombre entier de 2 à 7.

**13.** Composition polymère selon l'une quelconque des revendications 10 ou 11, caractérisée par le fait que dans la formule III, $R_3$ et $R_4$ désignent hydrogène, $R_5$ désigne méthyle, $R_6$ désigne hydrogène ou méthyle, $R_7$ désigne

hydrogène, méthyle, éthyle ou $CH_2OH$.

**14.** Composition polymère selon l'une quelconque des revendications 10 à 13, caractérisée par le fait que les monomères de formule II sont choisis parmi des composés aromatiques monofonctionnels constitués par le phényl (méth)acrylate, le benzyl(méth)acrylate, le phénoxyéthyl(méth)acrylate, le styrène ou parmi les composés non aromatiques choisis parmi les alkyl(méth)acrylates monofonctionnels, di- fonctionnels ou trifonctionnels.

**15.** Composition polymère selon la revendication 14, caractérisée par le fait que les monomères non aromatiques sont choisis parmi le méthyl(méth)acrylate, l'éthyl(méth)acrylate, le butyl(méth)acrylate, l'isobutyl(méth)acrylate, le butanediol di(méth)acrylate, le triméthylolpropane tri(méth)acrylate.

**16.** Composition polymère selon l'une quelconque des revendications 10 à 15, caractérisée par le fait que le composé de formule I est le 2,2-bis (4-méthacroyl oxydiéthoxyphényl)propane.

**17.** Composition polymère selon l'une quelconque des revendications 10 à 16 caractérisée par le fait que le composé de formule III est choisi parmi l'alcool allylique, l'alcool méthallylique, l'alcool crotylique, le 2-cyclohexène 1-ol, le trans 2-hexène 1-ol, le cis 2-butène 1,4-diol, le 3-méthyl 2-butène 1-ol.

**18.** Composition polymérisable pour lentille caractérisée par le fait qu'elle comprend

(A) un composant A comprenant au moins 50 % en poids d'un monomère ou d'un mélange de monomères répondant à la formule (I)

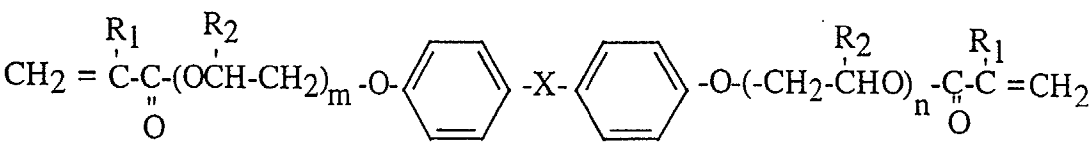

(I)

dans laquelle $R_1$ et $R_2$, identiques ou différents, désignent hydrogène ou alkyle en $C_1$-$C_6$; X désigne O, S, $SO_2$, -CO, $-CH_2-$, -CH=CH- ou

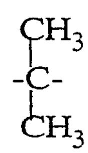

m + n est compris entre 0 et 10 ; et

. 0 à 50 % en poids d'un ou plusieurs comonomères vinylique(s), acrylique(s), ou méthacrylique(s) mono ou poly fonctionnel(s) (II) ; et

(B) un composant B présent dans des proportions de 0,5 à 15 % en poids, de préférence 1 à 5 % en poids, par rapport au poids des composants I + II, d'un composé de formule (III)

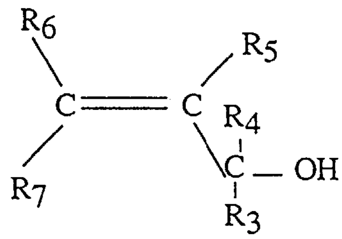 (III)

dans laquelle $R_3$ et $R_4$ désignent hydrogène ou bien l'un des radicaux $R_3$ ou $R_4$ est un atome d'hydrogène tandis que l'autre forme un cycle avec $R_7$ ayant 5 à 10 atomes de carbone éventuellement substitué par un ou plusieurs groupement(s) alkyle en $C_1$-$C_4$, linéaire(s) ou ramifié(s); $R_5$, $R_6$ sont choisis, indépendamment l'un de l'autre, parmi l'atome d'hydrogène, les groupements alkyle en $C_1$-$C_6$, pouvant être substitué(s) par un ou plusieurs groupement(s) OH et dont la chaîne peut éventuellement être interrompue par un ou plusieurs groupement(s) éther, ester ou cétonique, et $R_7$ lorsqu'il ne forme pas un cycle en $C_5$-$C_{10}$ avec un des radicaux $R_3$ ou $R_4$ étant un radical tel que défini pour $R_5$ et $R_6$.

**19.** Composition polymérisable selon la revendication 18, caractérisée par le fait qu'elle comprend les monomères de formule I, II ou III répondant à la définition de l'une quelconque des revendications 11 à 17.

**20.** Procédé de préparation de la composition polymère définie dans l'une quelconque des revendications 10 à 17, caractérisé par le fait que l'on mélange le ou les monomères de formule I et II en présence d'un amorceur ou catalyseur de polymérisation et qu'on ajoute 0,5 à 15 % en poids par rapport au poids des monomères de formule I et II, du dérivé d'alcool allylique répondant à la formule III et que l'on procède à la polymérisation.

**21.** Procédé de préparation de la composition polymère définie dans l'une quelconque des revendications 10 à 17, caractérisé par le fait que l'on procède à la polymérisation de la composition polymérisable selon les revendications 18 ou 19, par voie photochimique ou par chauffage par induction.

**22.** Procédé de fabrication d'une lentille finie ou semi-finie, caractérisé par le fait que l'on procède à la coulée de la composition polymérisable selon l'une quelconque des revendications 18 ou 19 entre deux moules présentant les géométries de surface requises puis que l'on procède à la polymérisation telle que définie dans la revendication 20 ou 21, suivie d'un recuit.

**23.** Lentille ophtalmique constituée par une composition polymère selon l'une quelconque des revendications 10 à 17.

**24.** Lentille ophtalmique constituée d'un polymère résultant de la polymérisation de la composition polymérisable telle que définie dans la revendication 18 ou 19 ou obtenue selon le procédé de la revendication 20 ou 21.

**25.** Utilisation de la composition polymère selon l'une quelconque des revendications 10 à 17, pour la fabrication de lentilles ophtalmiques ou de lentilles destinées à des viseurs ou des optiques d'appareils.

**26.** Utilisation d'une lentille telle que définie dans la revendication 23 ou 24, pour la fabrication de verres pour lunettes ou d'optiques diverses.

**27.** Verre de lunettes caractérisé par le fait qu'il est constitué d'une lentille telle que définie dans la revendication 23 ou 24.

**28.** Objectif caractérisé par le fait qu'il comprend au moins une lentille telle que définie dans l'une quelconque des revendications 23 ou 24.

**Patentansprüche**

**1.** Polymerzusammensetzung, dadurch gekennzeichnet, daß sie sich durch Polymerisation einer polymerisierbaren Zusammensetzung, umfassend mindestens ein Monomer der Formel (I),

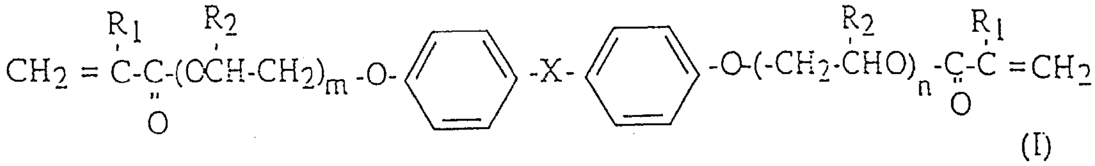

(I)

in welcher $R_1$ und $R_2$ gleich oder verschieden sein können und einen Wasserstoff oder einen $C_1$-$C_6$-Alkylrest bedeuten; X

O, S, $SO_2$, -CO, $-CH_2-$, -CH=CH- oder

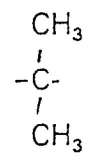

ist,

m + n zwischen 0 und 10 liegt;

und ein Monomer, welches von einem Allylalkohol abgeleitet ist, ergibt.

**2.** Verfahren zur Herstellung der Polymerzusammensetzung gemäß Anspruch 1, dadurch gekennzeichnet, daß man die Polymerisation der polymerisierbaren Zusammensetzung in Gegenwart eines Initiators oder Polymerisationskatalysators durchführt.

**3.** Verfahren gemäß Anspruch 2, dadurch gekennzeichnet, daß man die Polymerisation auf photochemischem Weg oder durch Induktionserwärmen durchführt.

**4.** Verfahren zur Herstellung einer fertigen oder halbfertigen Linse, dadurch gekennzeichnet, daß die polymerisierbare Zusammensetzung gemäß Anspruch 1 zwischen zwei Formen gegossen wird, welche die erforderlichen Oberflächengeometrien aufweisen, und anschließend die Polymerisation, wie sie in Anspruch 2 oder 3 definiert ist, durchgeführt wird, gefolgt von einem Tempern.

**5.** Ophtalmische Linse, gebildet aus einem Polymer, welches sich durch Polymerisation der polymerisierbaren Zusammensetzung, wie sie in Anspruch 1 definiert ist, ergeben hat oder gemäß dem Verfahren nach Anspruch 2 oder 3 erhalten wurde.

**6.** Verwendung der Polymerzusammensetzung gemäß Anspruch 1 zur Herstellung von ophtalmischen Linsen oder Linsen, die für einen Sucher oder Geräteoptiken bestimmt sind.

**7.** Verwendung einer Linse gemäß Anspruch 5 zur Herstellung von Brillengläsern oder von Gläsern verschiedener Optiken.

**8.** Brillenglas, dadurch gekennzeichnet, daß es aus einer wie in Anspruch 5 definierten Linse gebildet ist.

**9.** Objektiv, dadurch gekennzeichnet, daß es mindestens eine wie in Anspruch 5 definierte Linse umfaßt.

**10.** Polymerzusammensetzung, dadurch gekennzeichnet, daß sie sich durch Polymerisation einer polymerisierbaren Zusammensetzung ergibt, umfassend:

(A) eine Komponente A, umfassend: mindestens 50 Gew.-% eines Monomers oder eines Gemischs von Monomeren, dargestellt durch die Formel (I)

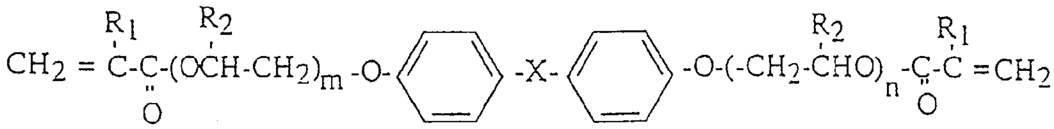
(I)

in welcher $R_1$ und $R_2$ gleich oder verschieden sind und Wasserstoff oder einen $C_1$ - $C_6$-Alkylrest darstellen; X

O, S, $SO_2$, -CO, $-CH_2-$, -CH=CH- oder

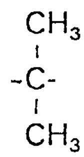

ist, m + n zwischen 0 und 10 liegt, und

. 0 bis 50 Gew.-% eines oder mehrerer vinylischer, acrylischer oder methacrylischer mono- oder polyfunktioneller Comonomere (II); und

(B) eine Komponente B, welche in Anteilen von

. 0,5 bis 15 Gew.-%, vorzugsweise 1 bis 5 Gew.-%, im Verhältnis zum Gewicht der Komponenten I + II zugegen ist und welche eine Zusammensetzung der Formel (III)

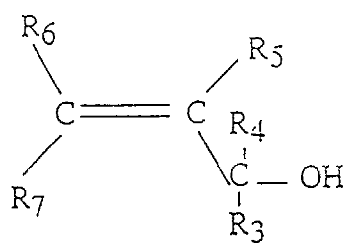
(III)

umfaßt, worin $R_3$ und $R_4$ Wasserstoff bedeuten, oder aber einer der Reste $R_3$ oder $R_4$ ein Wasserstoffatom ist, während der andere mit $R_7$ einen Ring bildet, welcher 5 bis 10 Kohlenstoffatome aufweist, die ggf. mit einer oder mehreren, linearen oder verzweigten $C_1$-$C_4$-Alkylgruppe(n) substituiert sind; $R_5$ und $R_6$ unabhängig voneinander ausgewählt sind aus Wasserstoffatom, $C_1$-$C_6$-Alkylgruppen, die mit einer oder mehreren Hydroxygruppen substituiert sein können und deren Kette ggf. durch eine oder mehrere Ether-, Ester- oder Ketogruppen unterbrochen sein kann, und $R_7$ ein Rest ist, wie er für $R_5$ und $R_6$ definiert ist, wenn $R_7$ nicht mit einem der Reste $R_3$ oder $R_4$ einen $C_5$-$C_{10}$-Ring bildet.

**11.** Polymerzusammensetzung gemäß Anspruch 10, dadurch gekennzeichnet, daß die Zusammensetzung der Formel I in Anteilen verwendet wird, die zwischen 70 und 100 Gew.-%, bezogen auf das Gewicht der Komponente A, liegen.

**12.** Polymerzusammensetzung gemäß einem der Ansprüche 10 oder 11, dadurch gekennzeichnet, daß in der Formel I $R_1$ und $R_2$ H oder $CH_3$ bedeuten und X

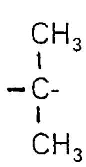

ist,
und m + n eine ganze Zahl zwischen 2 und 7 ist.

**13.** Polymerzusammensetzung gemäß einem der Ansprüche 10 oder 11, dadurch gekennzeichnet, daß in der Formel III $R_3$ und $R_4$ Wasserstoff bedeuten, $R_5$ Methyl ist, $R_6$ Wasserstoff oder Methyl bezeichnet, $R_7$ Wasserstoff; Methyl, Ethyl oder $CH_2OH$ bedeutet.

**14.** Polymerzusammensetzung gemäß einem der Ansprüche 10 bis 13, dadurch gekennzeichnet, daß die Monomeren der Formel II aus monofunktionellen aromatischen Zusammensetzungen ausgewählt sind, die gebildet sind aus Phenyl(meth)acrylat, Benzyl(meth)acrylat, Phenoxyethyl(meth)acrylat, Styrol oder aus nicht-aromatischen Zusammensetzungen, ausgewählt aus monofunktionellen, difunktionellen oder trifunktionellen Alkyl(meth)acrylaten.

**15.** Polymerzusammensetzung gemäß Anspruch 14, dadurch gekennzeichnet, daß die nicht aromatischen Monomeren ausgewählt sind aus Methyl(meth)acrylat, Ethyl(meth)acrylat, Butyl(meth)acrylat, Isobutyl(meth)acrylat, Butandioldi(meth)acrylat, Trimethylolpropantri(meth)acrylat.

**16.** Polymerzusammensetzung gemäß einem der Ansprüche 10 bis 15, dadurch gekennzeichnet, daß die Zusammensetzung der Formel I 2,2-bis(4-Methacroyloxydiethoxyphenyl)propan ist.

**17.** Polymerzusammensetzung gemäß einem der Ansprüche 10 bis 16, dadurch gekennzeichnet, daß die Zusammensetzung der Formel III ausgewählt ist aus Allylalkohol, Methallylalkohol, Crotylalkohol, 2-Cyclohexen-1-ol, *trans*-2-Hexan-1-ol, *cis*-2-Buten-1,4-diol, 3-Methyl-2-Buten-1-ol.

**18.** Polymerisierbare Zusammensetzung für Linsen, dadurch gekennzeichnet, daß sie umfaßt:

(A) eine Komponente A, umfassend mindestens 50 Gew.-% eines Monomers oder eines Gemischs von Monomeren, dargestellt durch die Formel (I)

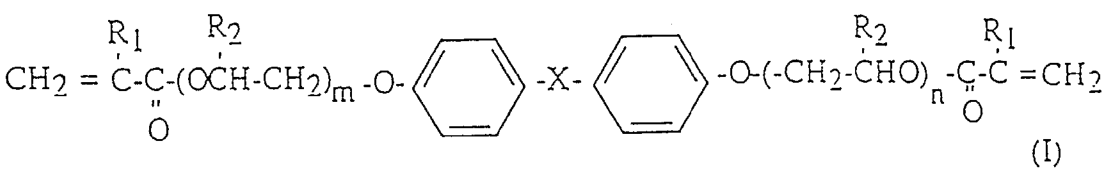

(I)

in welcher $R_1$ und $R_2$ gleich oder verschieden sind und Wasserstoff oder einen $C_1$-$C_6$-Alkylrest beschreiben; X
O, S, $SO_2$, -CO, $-CH_2-$, -CH=CH- oder

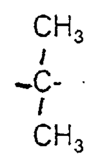

ist, m + n zwischen 0 und 10 liegt; und

- 0 bis 50 Gew.-% eines oder mehrerer mono- oder polyfunktioneller vinylischer, acrylischer oder methacrylischer Comonomere; und

(B) eine Komponente B, die in Anteilen von 0,5 bis 15 Gew.-%, vorzugsweise 1 bis 5 Gew.-%, bezogen auf das Gewicht der Komponenten I + II zugegen ist, einer Zusammensetzung der Formel (III)

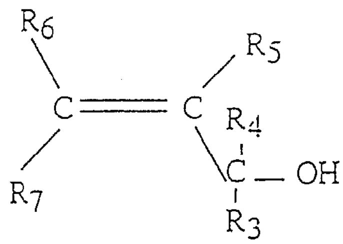

(III)

in welcher

$R_3$ und $R_4$ Wasserstoff bedeuten oder aber einer der Reste $R_3$ oder $R_4$ ein Wasserstoffatom ist, während der andere mit $R_7$ einen Ring bildet, welcher 5 bis 10 Kohlenstoffatome aufweist, die ggf. mit einer oder mehreren linearen oder verzweigten $C_1$-$C_4$-Alkylgruppe(n) substituiert ist,
$R_5$, $R_6$ unabhängig voneinander ausgewählt sind aus Wasserstoffatom, $C_1$-$C_6$-Alkylgruppen, die mit einer oder mehreren OH-Gruppen substituiert sein können und deren Kette ggf. durch eine oder mehrere Ether-, Ester- oder Ketogruppen unterbrochen sein kann, und $R_7$ ein Rest ist, wie er für $R_5$ und $R_6$ definiert ist, wenn $R_7$ nicht mit einem der Reste $R_3$ und $R_4$ einen $C_5$-$C_{10}$-Ring bildet.

**19.** Polymerisierbare Zusammensetzung gemäß Anspruch 18, dadurch gekennzeichnet, daß sie die Monomeren der Formel I, II oder III entsprechend der Definition, wie sie in einem der Ansprüche 11 bis 17 angegeben ist, umfaßt.

**20.** Verfahren zur Herstellung der in einem der Ansprüche 10 bis 17 definierten Polymerzusammensetzung, dadurch gekennzeichnet, daß man das oder die Monomere(n) der Formel I und II in Anwesenheit eines Polymerisationsinitiators oder -katalysators vermischt und daß man 0,5 bis 15 Gew.-%, bezogen auf das Gewicht der Monomeren der Formeln I und II, eines Allylalkoholderivats, welches durch die Formel III dargestellt ist, hinzufügt und daß man die Polymerisation ausführt.

**21.** Verfahren zur Herstellung der in einem der Ansprüche 10 bis 17 definierten Polymerzusammensetzung, dadurch gekennzeichnet, daß man die Polymerisation der polymerisierbaren Zusammensetzung gemäß den Ansprüchen 18 oder 19 auf photochemischem Wege oder durch Induktionserwärmung durchführt.

**22.** Verfahren zur Herstellung einer fertigen oder halbfertigen Linse, dadurch gekennzeichnet, daß die polymerisierbare Zusammensetzung gemäß einem der Ansprüche 18 oder 19 zwischen zwei Formen gegossen wird, welche die erforderlichen Oberflächengeometrien aufweisen, wonach die Polymerisation dann, wie in Anspruch 20 oder 21 beschrieben, durchgeführt wird, gefolgt von einem Tempern.

**23.** Ophtalmische Linse, aus einer Polymerzusammensetzung gemäß einem der Ansprüche 10 bis 17.

**24.** Ophtalmische Linse aus einem Polymer, welches sich durch die Polymerisation der polymerisierbaren Zusammensetzung, wie sie in den Ansprüchen 18 oder 19 definiert ist, ergeben hat oder gemäß dem Verfahren in Ansprüchen 20 oder 21 erhalten wurde.

**25.** Verwendung der Polymerzusammensetzung gemäß einem der Ansprüche 10 bis 17 zur Herstellung von ophtalmischen Linsen oder Linsen, die für Sucher oder Geräteoptiken bestimmt sind.

**26.** Verwendung einer Linse gemäß Anspruch 23 oder 24 zur Herstellung von Brillengläsern oder von Gläsern verschiedener Optiken.

**27.** Brillenglas, dadurch gekennzeichnet, daß es aus einer wie in Anspruch 23 oder 24 definierten Linse gebildet ist.

**28.** Objektiv, dadurch gekennzeichnet, daß es mindestens eine wie in irgendeinem der Ansprüche 23 oder 24 definierte Linse umfaßt.

## Claims

1. Polymer composition characterised in that it is obtained by polymerisation of a polymerisable composition comprising at least one monomer having formula I

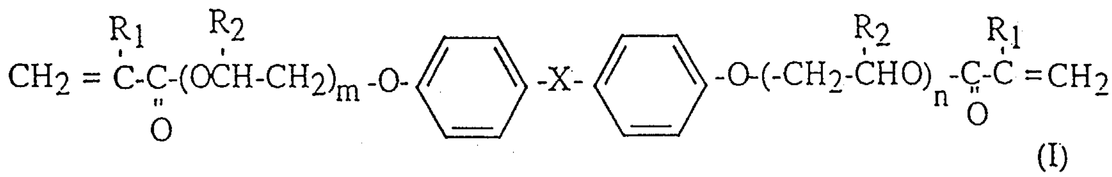

(I)

wherein $R_1$ and $R_2$, which may be identical or different, represent hydrogen or $C_1$-$C_6$ alkyl, X represents O, S, $SO_2$, -CO, $-CH_2-$, -CH=CH- or

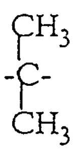

and m + n is between 0 and 10, and a monomer derived from allyl alcohol.

2. Method of preparing the polymer composition according to claim 1 characterised in that the polymerisable composition is polymerised in the presence of a polymerisation initiator or catalyst.

3. Method according to claim 2 characterised in that polymerisation is carried out photochemically or by induction heating.

4. Method of manufacturing a finished or semifinished lens characterised in that the polymerisable composition according to claim 1 is cast between two moulds having the required surface geometries and polymerisation is then carried out as defined in claim 2 or claim 3, followed by annealing.

5. Ophthalmic lens made of a polymer obtained by polymerisation of the polymerisable composition as defined in claim 1 or obtained by the method of claim 2 or claim 3.

6. Use of the polymer composition according to claim 1 in the manufacture of ophthalmic lenses or lenses for use in eyepieces or camera optics.

7. Use of a lens as defined in claim 5 in the manufacture of spectacle or other optical lenses.

8. Spectacle lens characterised in that it is a lens as defined in claim 5.

9. Lens assembly characterised in that it comprises at least one lens as defined in claim 5.

10. Polymer composition characterised in that it is obtained by polymerisation of a polymerisable composition comprising:

    (A) a component A comprising at least 50% by weight of a monomer or mixture of monomers having formula I

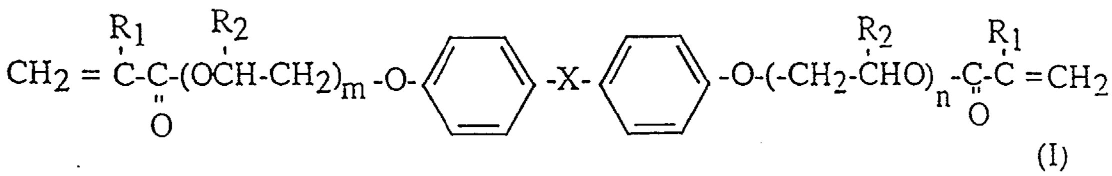

(I)

wherein $R_1$ and $R_2$, which may be identical or different, represent hydrogen or $C_1$-$C_6$ alkyl, X represents O, S, $SO_2$, -CO, $-CH_2-$, -CH=CH- or

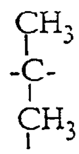

and wherein m + n is between 0 and 10,

. 0 to 50% by weight of one or more mono- or polyfunctional vinyl, acrylic or methacrylic comonomers (II);

(B) a component B in a proportion of

. 0.5 to 15%, preferably 1 to 5% by weight with respect to the weight of components (I) and (II) comprising a compound having formula (III)

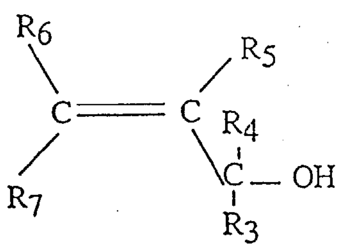

(III)

wherein

$R_3$ and $R_4$ represent hydrogen or one of radicals $R_3$ and $R_4$ represents hydrogen whilst the other forms with $R_7$ a ring having 5 to 10 carbon atoms which may be substituted with one or more linear or branched $C_1$-$C_4$ alkyl groups;
$R_5$ and $R_6$ are selected independently of each other from hydrogen or $C_1$-$C_6$ alkyl groups which may be substituted by one or more OH groups, and wherein the chain may be interrupted by one or more ether, ester or ketone groups, and $R_7$ when it does not form with one of radicals $R_3$ or $R_4$ a $C_5$-$C_{10}$ ring is a radical as defined for $R_5$ and $R_6$.

**11.** Polymer composition according to claim 10 characterised in that the compound having formula I is used in proportions of between 70 and 100% by weight with respect to the weight of component A.

**12.** Polymer composition according to claim 10 or 11 characterised in that in formula I, $R_1$ and $R_2$ represent H or $CH_3$ and X represents

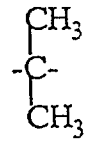

and m + n is a whole number between 2 and 7.

**13.** Polymer composition according to claim 10 or 11 characterised in that in formula III $R_3$ and $R_4$ represent hydrogen, $R_5$ represents methyl, $R_6$ represents hydrogen or methyl and $R_7$ represents hydrogen, methyl, ethyl or $CH_2OH$.

**14.** Polymer composition according to any one of claims 10 to 13 characterised in that the monomers having formula II are selected from monofunctional aromatic compounds constituted by phenyl(meth)acrylate, benzyl(meth)acrylate, phenoxyethyl(meth)acrylate and styrene, or from non-aromatic compounds selected from monofunctional, difunctional or trifunctional alkyl(meth)acrylates.

**15.** Polymer composition according claim 14 characterised in that the non-aromatic monomers are selected from methyl(meth) acrylate, ethyl(meth) acrylate, butyl(meth)acrylate, isobutyl(meth) acrylate, butanediol di(meth)acrylate, and trimethylolpropane tri(meth)acrylate.

**16.** Polymer composition according to any one of claims 10 to 15 characterised in that the compound having formula I is 2,2-bis (4-methacroyl oxydiethoxyphenyl)propane.

**17.** Polymer composition according to any one of claims 10 to 16 characterised in that the compound having formula III is selected from allyl alcohol, methallyl alcohol, crotyl alcohol, 2-cyclohexene 1-ol, trans 2 -hexene 1-ol, cis 2-butene 1,4-diol, and 3-methyl 2-butene 1-ol.

**18.** A polymerisable composition for lenses characterised in that it comprises

(A) at least 50% by weight of a monomer or mixture of monomers having formula I

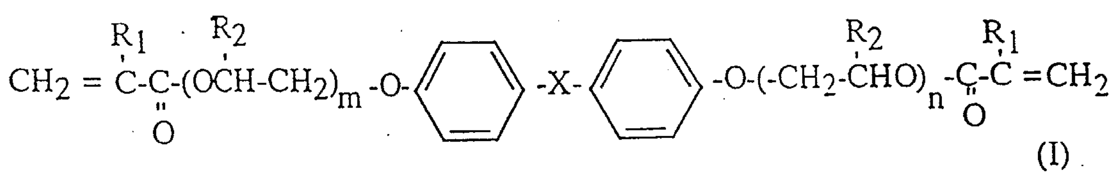

(I)

wherein $R_1$ and $R_2$, which may be identical or different, represent hydrogen or $C_1$-$C_6$ alkyl, X represents O, S, $SO_2$, -CO, -$CH_2$-, -CH=CH- or

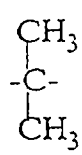

and wherein m + n is between 0 and 10, and

. 0 to 50% by weight of one or more mono- or polyfunctional vinyl, acrylic or methacrylic comonomers (II);

(B) a component B in a proportion of

. 0.5 to 15%, preferably 1 to 5% by weight with respect to the weight of components (I) and (II) of a compound

having formula (III)

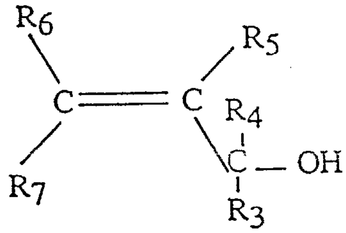

(III)

wherein

$R_3$ and $R_4$ represent hydrogen or one of radicals $R_3$ and $R_4$ represents a hydrogen atom whilst the other forms with $R_7$ a ring having 5 to 10 carbon atoms which may be substituted with one or more linear or branched $C_1$-$C_4$ alkyl groups;
$R_5$ and $R_6$ are independently of each other selected from hydrogen or $C_1$-$C_6$ alkyl groups which may be substituted by one or more OH groups, and wherein the chain may be interrupted by one or more ether, ester or ketone groups, and $R_7$ when it does not form a $C_5$-$C_{10}$ ring with one of the radicals $R_3$ or $R_4$ is a radical as defined for $R_5$ and $R_6$.

**19.** Polymerisable composition according to claim 18 characterised in that it comprises monomers having formula I, II or III which correspond to any one of claims 11 to 17.

**20.** Method of preparing a polymer composition as defined in any one of claims 10 to 17 characterised in that one or more monomers having formula I and II are mixed in the presence of a polymerisation initiator or catalyst and 0.5 to 15% by weight with respect to the weight of monomers having formula I and II is added of an allyl alcohol derivative having formula III and polymerisation is effected.

**21.** Method of preparing a polymer composition as defined in any one of claims 10 to 17 characterised in that polymerisation of the polymerisable composition in accordance with claim 18 or claim 19 is carried out photochemically or by induction heating.

**22.** Method of preparing a finished or semifinished lens characterised in that a polymerisable composition according to claim 18 or claim 19 is cast between two moulds having the required surface geometries and polymerisation is carried out as defined in claim 20 or 21, followed by annealing.

**23.** Ophthalmic lens made from a polymer composition according to any one of claims 10 to 17.

**24.** Ophthalmic lens made from a polymer resulting from the polymerisation of a polymerisable composition as defined in claim 18 or 19 or obtained by the method of claim 20 or 21.

**25.** Use of a polymer composition according to any one of claims 10 to 17 in the manufacture of ophthalmic lenses or lenses for use in eyepieces or camera optics, etc.

**26.** Use of a lens as defined in claim 23 or 24 in the manufacture of spectacle or other optical lenses.

**27.** Spectacle lens characterised in that it is a lens as defined in claim 23 or 24.

**28.** Lens assembly characterised in that it comprises at least one lens as defined in claim 23 or 24.